# EUROPEAN PATENT SPECIFICATION

(11) **EP 1 903 196 B1**
(45) Date of publication and mention of the grant of the patent: **27.11.2013**
(21) Application number: 07018394.2
(22) Date of filing: 19.09.2007
(51) Int. Cl.: F02B 61/02, F02B 27/02

(54) **Intake control device and its control method**
Einlasssteuerungsvorrichtung und Steuerungsverfahren dafür
Dispositif de contrôle d'admission et son procédé de contrôle

(30) Priority: 20.09.2006 JP 2006255051
(43) Date of publication of application: 26.03.2008
(73) Proprietor: Yamaha Hatsudoki Kabushiki Kaisha, Iwata-shi, Shizuoka 438-8501 (JP)
(72) Inventor: Noborio, Daichi, Iwata-shi Shizuoka-ken 438-8501 (JP); Akatsuka, Hidenori, Iwata-shi Shizuoka-ken 438-8501 (JP)
(74) Representative: Grünecker, Kinkeldey, Stockmair & Schwanhäusser

(56) References cited:
- EP-B1- 1 293 653
- JP-A- 63 038 612
- JP-A- 63 189 617
- JP-A- 63 198 721

## Description

The present invention relates to an intake control device which changes a length of an intake conduit to vary an output characteristic of the engine, and a straddle type vehicle having same. Further, the present invention relates to a method for controlling a change of a length of an intake conduit of an engine.

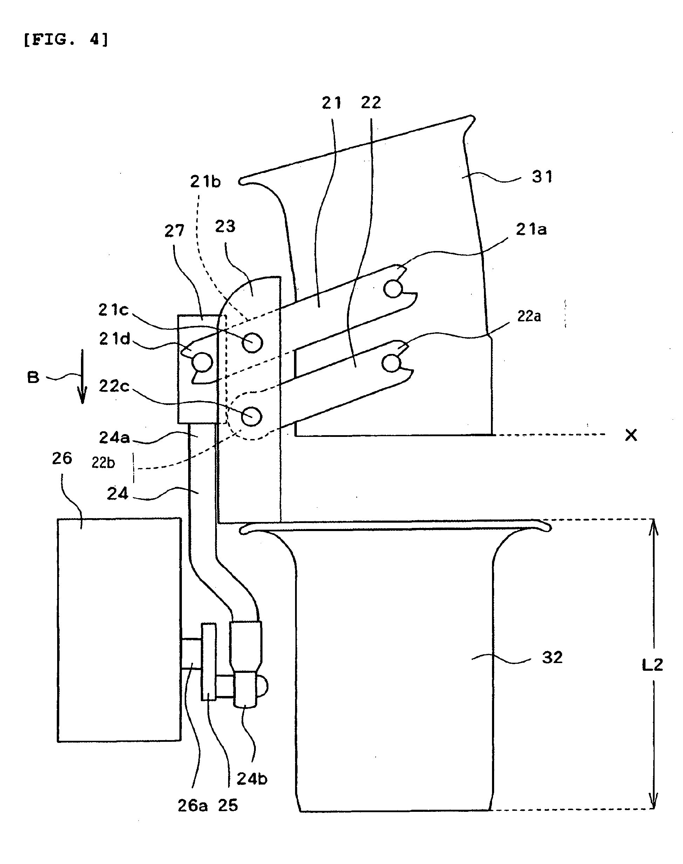

Conventionally, as one of intake control devices mounted to straddle type vehicles such as, for example, motorcycles, there is a device in which a length of an intake conduit is changed from a predetermined length to a length shorter than the predetermined length when an engine load (such as, for example, an engine speed or a throttle valve opening) reaches a predetermined threshold value; thereby, an output characteristic of the engine varies (for example, Patent Document 1). Patent Document 2 discloses a switchable intake port which is switched based on one threshold as shown in Figure 4 depending on the particular intake pressure Pc and the particular engine rotation speed Nc which marks the division between the low load/low rotational speed and the high load/high rotational speed condition.

Patent Document 3 shows an air choke with adjustable length based on the evaluation of the engine rotational speed. The length is continuously adjusted for each rpm interval.

Patent Document 4 describes a switch valve which is opened in regard of the engine rotational speed. When the engine rotational speed R1 is reached the valve is opened at the time when the engine speed is increasing. At the engine rotational speed R2 the valve is closed at the time when the engine speed is decreasing.

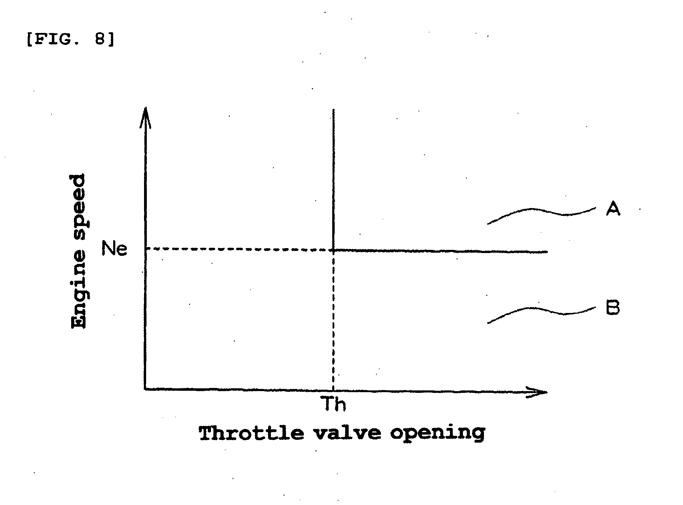

FIG. 8 is a graph for explaining an example of a change control of a length of an intake conduit according to a conventional intake device. The horizontal axis of the graph indicates throttle valve openings and the vertical axis thereof indicates engine speeds. The intake control device changes a length of an intake conduit from a predetermined length to a length shorter than the predetermined length when, for example, the throttle valve opening exceeds a predetermined threshold value Th and an engine speed exceeds a predetermined threshold value Ne (i.e., when a running state reaches an area indicated by the letter A in FIG. 8). Afterwards, the intake control device returns the length of the intake conduit to the predetermined length when the throttle valve opening falls below the threshold value Th or the engine speed falls below the threshold value Ne (i.e., when the running state reaches an area indicated by the letter B in FIG. 8).
Patent Document 1: JP-A-Hei 9-100720
Patent Document 2: JP 63-198721
Patent Document 3: EP 1293653
Patent Document 4: JP 63-189617

However, there can be a drawback that the conventional intake control device affords no comfortable ride feelings because of a result that the length of the intake conduit frequently changes with frequent variations of the engine load in the proximity of the threshold value.

The present invention is made under the circumstances, and an object of the present invention is to provide an intake control device and method as indicated above that can avoid improper changes of a length of an intake conduit even though, an engine load frequently varies.

For the apparatus aspect, this objective is solved in an inventive manner by an intake control device for an engine comprising: a change control means for changing a length of an intake conduit between a first length and a second length shorter than the first length; and a determining means for determining whether or not the length of the intake conduit needs to be changed by the change control means, wherein the determining means is configured to determine requirement that the first length is to be changed to the second length based on the condition that an engine load is higher than a first threshold value, and is configured to determine requirement that the second length is to be changed to the first length based on the condition that the engine load is lower than a second threshold value, and wherein the second threshold value is set lower than the first threshold value.

According to the invention, the determining means is configured to determine requirement for the change from the first length to the second length based on the additional condition that an elapsing time in which a vehicle is adapted to run with an engine load higher than the predetermined first threshold value is longer than a predetermined necessary time.

Further, preferably the intake conduit includes a fixed conduit connected to an engine and a movable conduit movable between a connected position where the movable conduit is connected to the fixed conduit and a disconnected position where the movable conduit is spaced apart from the connected position, and the change control means is configured to change the length of the intake conduit by moving the movable conduit between the connected position and the disconnected position.

Still further, preferably there is provided a straddle type vehicle to which the intake control device according to one of the above embodiments is mounted.

For the method aspect, this objective is solved in an inventive manner by a method for controlling a change of a length of an intake conduit of an engine of a vehicle between a first length and a second length, shorter than the first length, wherein a running state of the vehicle is determined to correspond to a condition to change from the first length to the second length when a load of the engine is higher than a first threshold value, and to correspond to a condition to change from the second length to the first length when the load of the engine is lower than a second threshold value set lower than the first threshold value and a determining means is configured to determine requirement for the change from the first length to the second length based on the additional condition that an elapsing time in which a vehicle is adapted to run with an engine load higher than the predetermined first threshold value is longer than a predetermined necessary time.

Preferably, the first and second threshold values are respectively set for an engine speed and/or for a throttle valve opening.

Further, preferably when the movable conduit is placed at the connected position, it is determined whether or not the engine speed exceeds an engine speed threshold value for acceleration, and wherein, when the engine speed exceeds the engine speed threshold value for acceleration, it is determined that the running state of the vehicle corresponds to the condition of disconnection.

Still further, preferably when the movable conduit is placed at the disconnected position, it is determined whether or not the engine speed falls below an engine speed threshold value for deceleration which is lower than the engine speed threshold value for acceleration, and wherein, when the engine speed falls below the engine speed threshold value for deceleration, it is determined that the running state of the vehicle corresponds to the condition of connection.

Therein, it is beneficial if a difference between the engine speed threshold value for acceleration and the engine speed threshold value for deceleration is updated in response to a frequency of changes of the engine speed.

Further, it is beneficial if, when the movable conduit is placed at the connected position, it is determined whether or not the throttle valve opening exceeds a throttle valve opening threshold value for acceleration, and wherein, when the throttle valve opening exceeds the throttle valve opening threshold value for acceleration, it is determined that the running state corresponds to the condition of disconnection.

Still further, it is beneficial if, when the movable conduit is placed at the disconnected position, it is determined whether or not the throttle valve opening falls below a throttle valve opening threshold value for deceleration which is lower than the throttle valve opening threshold value for acceleration, and wherein, when the throttle valve opening falls below the throttle valve opening threshold value for deceleration, it is determined that the running state corresponds to the condition of connection.

Yet further still, it is beneficial if a difference between the throttle valve opening threshold value for acceleration and the throttle valve opening threshold for deceleration is updated in response to a frequency of changes of the throttle valve opening.

In the following, the present invention is explained in greater detail with respect to several embodiments thereof in conjunction with the accompanying drawings, wherein:
- FIG. 1: is a side elevational view of a motorcycle to which an intake control device according to one embodiment is mounted,
- FIG. 2: is a schematic diagram showing structures of the intake control device and an engine,
- FIG. 3: is a schematic view showing an example of an intake conduit length varying mechanism. A movable conduit in the figure is connected to a fixed conduit,
- FIG. 4: is a schematic view showing the example of the intake conduit length varying mechanism. The movable conduit in the figure is spaced apart from the fixed conduit,
- FIG. 5: is a functional block diagram of a control section incorporated in the intake control device,
- FIG. 6: is a graph for explaining an example of a change control of a length of an intake conduit according to the control section,
- FIG. 7: is a flowchart showing an example of processes executed by the control section, and
- FIG. 8: is a graph for explaining an example of the change control of the length of the intake conduit according to a conventional intake control device.

### Description of Reference Numerals and Symbols:

- 1:: motorcycle
- 3:: vehicle frame
- 4:: steering shaft
- 7:: air cleaner
- 8:: exhaust conduit
- 10:: intake control device
- 11:: control section
- 11a:: change control part (change control means)
- 11b:: determination processing part (determining means)
- 12:: storage section
- 13:: actuator drive circuit
- 14:: intake conduit length varying mechanism
- 21:: upper arm
- 22:: lower arm
- 23:: pillar
- 24:: arm
- 25:: coupling member
- 26:: actuator
- 27:: connecting member
- 30:: intake conduit
- 31:: movable conduit
- 32:: fixed conduit
- 47:: injector
- 48:: throttle position sensor
- 49:: throttle body
- 50:: engine
- 51:: cylinder
- 52:: piston
- 53:: connecting rod
- 54:: crankshaft
- 55:: flywheel
- 56:: crankcase
- 57:: crank angle sensor
- X:: disconnected position
- Y:: connected position
- L1:: length of connection (first length)
- L2:: length of disconnection (second length)
- Ne1:: engine speed threshold value for acceleration (first threshold value)
- Ne2:: engine speed threshold value for deceleration (second threshold value)
- Th1:: throttle valve opening threshold value for acceleration (first threshold value)
- Th2:: throttle valve opening threshold value for deceleration (second threshold value)
- T:: elapsing time after throttle valve opening exceeds throttle valve opening threshold
- value: for acceleration (elapsing time in which vehicle runs with engine load higher than
- first: threshold value)
- T1:: necessary time for acceleration (necessary time)

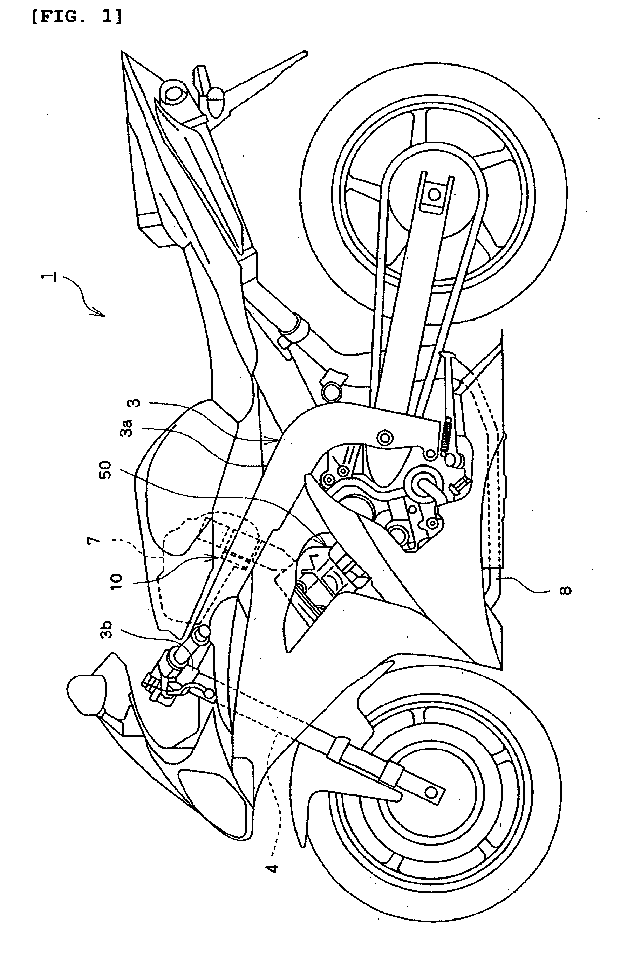

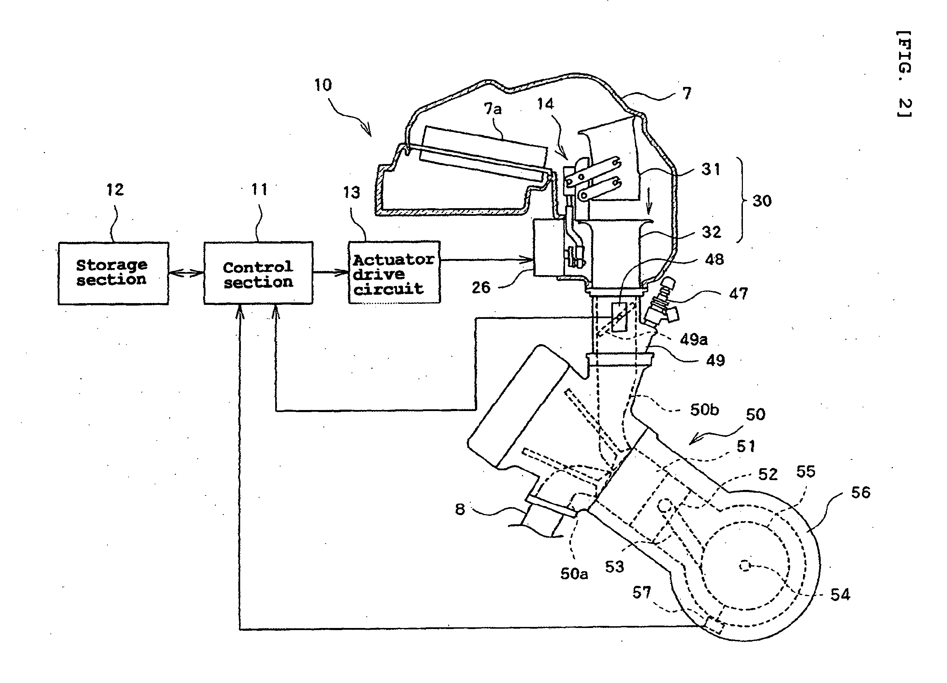

Hereunder, one embodiment will be described with reference to drawings. FIG. 1 is a side elevational view of a motorcycle 1 having an intake control device 10 mounted thereto, which is an example of the embodiment of the present teaching. FIG. 2 is a schematic diagram showing structures of the intake control device 10 and an engine 50.

As shown in FIG. 1, the motorcycle 1 has a vehicle frame 3 and the engine 50 other than the intake control device 10. Also, as shown in FIG. 2, the intake control device 10 includes a control section 11, a storage section 12, an actuator drive circuit 13 and an intake conduit length varying mechanism 14.

As shown in FIG. 1, the vehicle frame 3 includes a main frame 3a. A front end portion of the main frame 3a has a steering head section 3b supporting a steering shaft 4. The main frame 3a extends obliquely downward to the rear of the vehicle body from the steering head section 3b. The engine 50 is disposed below the main frame 3a.

As shown in FIG. 2, exhaust ports 50a are defined in the engine 50. Exhaust conduits 8 are connected to the respective exhaust ports 50a. Also, intake ports 50b are defined in the engine 50. Throttle bodies 49 are connected to the respective intake ports 50b. Fuel injectors 47 are attached to the respective throttle bodies 49 to inject fuel to intake passages of the throttle bodies 49. A throttle valve 49a is placed in the intake passage of each throttle body 49. A throttle valve position sensor 48 is attached to a lateral side of one throttle body 49 to detect a throttle valve opening. The throttle valve position sensor 48 outputs a voltage signal corresponding to the throttle valve opening to the control section 11.

An air cleaner 7 is disposed above the engine 50. Air passing through a filter 7a of the air cleaner 7 and purified thereby flows into the throttle bodies 49. The air cleaner 7 contains intake conduits 30 through which the air flows to be delivered to the engine. Air introduced into the air cleaner 7 passes through the intake conduits 30 and flows into the throttle bodies 49. Additionally, as will be described later, each intake conduit 30 in this embodiment includes a fixed conduit 32 which is connected to the associated throttle body 49 and is fixed thereto, and a movable conduit 31 which is movable in a direction in which the movable conduit 31 is connected to the fixed conduit 32 or in another direction in which the movable conduit 31 is spaced apart from the fixed conduit 32. Because the movable conduit 31 is connected to the fixed conduit 32 or is spaced apart from the fixed conduit 32, the length of the passage of each intake conduit 30 through which the air flows can be changed. Thereby, the output characteristic of the engine 50 varies.

A cylinder 51 of the engine 50 contains a piston 52. A top end of a connecting rod 53 is coupled with the piston 52, while a bottom end thereof is coupled with a crankshaft 54. A flywheel 55 is mounted to the crankshaft 54. A crank angle sensor 57 is attached to the crankcase 56 to face an outer circumferential surface of the flywheel 55. The crank angle sensor 57 outputs pulse signals with a frequency corresponding to an engine speed. The control section 11 detects a rotational speed of the engine 50 (hereunder called "engine speed") based upon the frequency with which the signals are inputted.

As described above, the intake control device 10 includes the control section 11, the storage section 12, the actuator drive circuit 13 and the intake conduit length varying mechanism 14. The intake conduit length varying mechanism 14 is a mechanism which changes the length of the passage through which the air flows in the intake conduit 30 (hereunder called "intake conduit length"). As described above, in the example explained here, the intake conduit 30 includes the fixed conduit 32 and the movable conduit 31. Also, the intake conduit length varying mechanism 14 includes an actuator 26 which changes a position of the movable conduit 31 as well.

The movable conduit 31 moves relative to the fixed conduit 32 between a position where the movable conduit 31 is connected to the fixed conduit 32 and another position where the movable conduit 31 is spaced apart from the connected position. Thereby, the intake conduit length given when the movable conduit 31 is connected to the fixed conduit 32 (first length) is set longer than the intake conduit length given when the movable conduit 31 is spaced apart from the fixed conduit 32 (second length).

The actuator 26 is driven with the drive power supplied from the actuator drive circuit 13 to move the movable conduit 31.

The actuator drive circuit 13 supplies a drive current, which corresponds to the signal inputted from the control section 11, to the actuator 26.

The control section 11 includes the CPU (central processing unit) and controls various electrical components mounted to the vehicle body in accordance with programs stored in the storage section 12. Particularly, in this embodiment, the control section 11 moves the movable conduit 31 in accordance with an engine load (for example, an engine speed and a throttle valve opening) to execute processes for changing the intake conduit length. The processes executed by the control section 11 will be described later.

The storage section 12 includes non-volatile memory and volatile memory to hold programs executed by the control section 11.

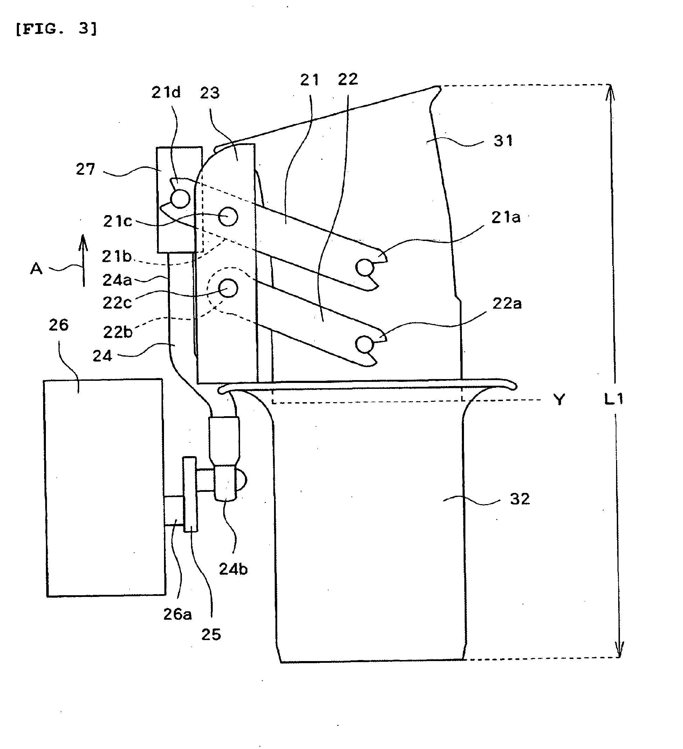

The example of the intake conduit length varying mechanism 14 will be described in detail below. FIGs. 3 and 4 are schematic views of the intake conduit length varying mechanism 14. Additionally, in the example shown in FIG. 3, the movable conduit 31 is placed at a position Y where the movable conduit 31 is connected to the fixed conduit 32 (hereunder called "connected position"). The movable conduit 31, in the example shown in FIG. 4, is placed at a position X where, the movable conduit 31 is spaced apart from the fixed conduit 32 (hereunder called "disconnected position").

The movable conduit 31 is supported by one end 21 a of an upper arm 21 and one end 22a of a lower arm 22 for movement in a vertical direction. The upper arm 21 and the lower arm 22 are arranged next to each other in the vertical direction to extend parallel to each other. The other end 22b of the lower arm 22 is supported by a pillar 23 extending upward from a rim portion of the fixed conduit 32, while a mid portion 21 b of the upper arm 21 is supported by the pillar 23. Each of the other end 22b and the mid portion 21 b has a fulcrum 21 c, 22c. The upper arm 21 and the lower arm 22 are pivotable about the respective fulcrums 21 c, 22c under a condition that the relationships in position between the upper and lower arms 21, 22 extending parallel to each other are maintained. The other end 21 d of the upper arm 21 is connected to one end 24a of an arm 24 which is movable vertically through a connecting member 27. The other end 24b of the arm 24 is connected to an output shaft 26a of the actuator 26 through a coupling member 25. The coupling member 25 extends in a radial direction of the output shaft 26a. Therefore, the other end 24b of the arm 24 is spaced apart from the output shaft 26a of the actuator 26 in the radial direction.

An operation of the intake conduit length varying mechanism 14 will be described. When the output shaft 26a of the actuator 26 rotates in its right direction to raise the arm 24 upward (in the direction indicated by the mark A of FIG. 3), the upper arm 21 and the lower arm 22 pivot downward about the respective fulcrums 21 c, 22c. As a result, the movable conduit 31 moves downward to be placed at the connected position Y. On this occasion, the intake conduit length is set to the length L1 (hereunder called "the length of connection") that is made by adding the lengths of the movable conduit 31 and the fixed conduit 32. On the other hand, when the output shaft 26a of the actuator 26 rotates in its reverse direction to lower the arm 24 downward (in the direction indicated by the mark B of FIG. 4), the upper arm 21 and the lower arm 22 pivot upward about the respective fulcrums 21 c, 22c. As a result, the movable conduit 31 moves upward to be placed at the disconnected position X. On this occasion, the length of the movable conduit 31 is no longer included in the intake conduit length. The intake conduit length is thus set to the length L2 (hereunder called "the length of disconnection") that is shorter than the length of connection L1. Additionally, in accordance with processes executed by the control section 11 which will be describe later, the movable conduit 31 is placed at the disconnected position X when the engine load is high such as, for example, when the vehicle is accelerated, and the movable conduit 31 is placed at the connected position Y when the engine load is low.

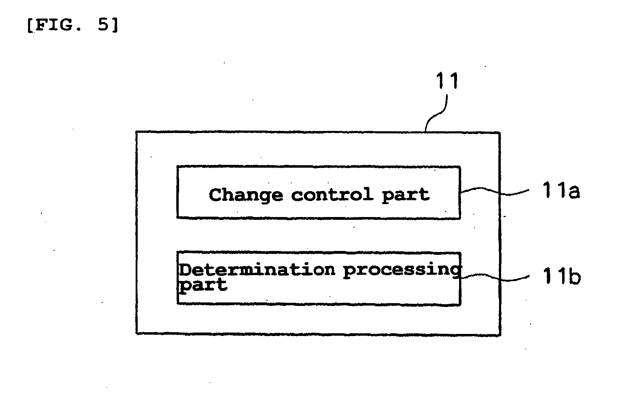

The processes executed by the control section 11 will be described below. FIG. 5 is a functional block diagram showing the processes executed by the control section 11. As shown in FIG. 5, the control section 11 includes a change control part 11 a and a determination processing part 11 b.

The change control part 11 a executes processes for changing the intake conduit length between the length of connection L1 and the length of disconnection L2 in response to a determination result of the determination processing part 11 b to be described later. Specifically, if a running state of the vehicle is determined to correspond to a predetermined condition (hereunder called "condition of connection") in processes of the determination processing part 11b, to be described later, when the movable conduit 31 is placed at the disconnected position X, the change control part 11 a executes processes to move the movable conduit 31 from the disconnected position X to the connected position Y. Also, if the running state is determined to correspond to another predetermined condition (hereunder called "condition of disconnection") in the processes of the determination processing part 11 b when the movable conduit 31 is placed at the connected position Y, the change control part 11 a executes processes to move the movable conduit 31 from the connected position Y to the disconnected position X. The processes for changing the intake conduit length are executed, for example, as follows:

A position detecting sensor (for example, a potentiometer) for detecting a position of the movable conduit 31 is previously disposed in the intake conduit length varying mechanism 14. The change control part 11 a outputs a signal commanding a drive of the actuator 26 to the actuator drive circuit 13 while detecting the position of the movable conduit 31 based upon a signal inputted from the position detecting sensor. When the movable conduit 31 reaches the connected position Y or the disconnected position X, the change control section 11 a stop outputting the signal to the actuator drive circuit 13 to stop driving the actuator 26.

Also, the change control part 11 a can drive the actuator 26 for a predetermined period of time to move the movable conduit 31 from the connected position Y to the disconnected position X without detecting the position of the movable conduit 31. In this connection, the predetermined time is a required time for the movable conduit 31 to move from the connected position Y to the disconnected position X or from the disconnected position X to the connected position Y. The predetermined time is set in a production stage or the like of the intake control device 10.

The determination processing part 11b determines whether or not the intake conduit length is changed by the processes of the change control part 11 a discussed above.

Specifically, the determination processing part 11 b determines whether or not the running state of the vehicle corresponds to the condition of disconnection under which the intake conduit length needs to be changed to the length of disconnection L2, if the intake conduit length is set to the length of connection L1. On the other hand, the determination processing part 11 b determines whether or not the running state corresponds to the condition of connection under which the intake conduit length needs to be changed to the length of disconnection L2, if the intake conduit length is set to the length of disconnection L2.

For example, the determination processing part 11 b determines whether the engine load reaches a predetermined threshold value, in order to determine whether or not the running state corresponds to the condition of disconnection, i.e., whether or not the intake conduit length needs to be short. On the other hand, the determination processing part 11 b determines whether the engine load falls below a threshold value which is set lower than the above threshold value, in order to determine whether or not the running state corresponds to the condition of connection, i.e., whether or not the intake conduit length needs to be long. Thereby, improper changes of the intake conduit length can be avoided even though, for example, the rider frequently operates the throttle valve and the running state frequently varies in the proximity of the change condition of the intake conduit length. Additionally, the engine load includes, for example, a throttle valve opening and an engine speed. The determination processes by the determination processing part 11 b are executed, for example, as follows:

First, the determination processes will be described in connection with an example in which a threshold value for the engine speed is set. In this example, the determination processing part 11 b calculates an engine speed based upon signals inputted from the crank angle sensor 57 with a preset sampling cycle (for example, dozens of milliseconds). When the movable conduit 31 is placed at the connected position Y, the determination processing part 11b determines whether or not the engine speed exceeds a predetermined threshold value (hereunder called "engine speed threshold value for acceleration") is determined whenever the determination processing part 11 b calculates the engine speed. The determination processing part 11 b determines that the running state of the vehicle corresponds to the condition of disconnection when the engine speed exceeds the engine speed threshold value for acceleration. As a result, the above change control part 11 a moves the movable conduit 31 to the disconnected position X to set the intake conduit length to the length of disconnection L2.

In the meantime, when the movable conduit 31 is placed at the disconnected position X, the determination processing part 11 b determines whether or not the engine speed falls below a threshold value (hereunder called "engine speed threshold value for deceleration") which is lower than the engine speed threshold value for acceleration is determined whenever the determination processing part 11 b calculates the engine speed. The determination processing part 11 b determines that the running state of the vehicle corresponds to the condition of connection when the engine speed falls below the engine speed threshold value for deceleration. As a result, the change control part 11 a moves the movable conduit 31 to the connected position Y to set the intake conduit length to the length of connection L1.

In this connection, a difference between the engine speed threshold value for acceleration and the engine speed threshold value for deceleration is, for example, a predetermined value. Also, the difference can be updated in response to a frequency of changes of the engine speed. For example, the control section 11 detects engine speeds with predetermined sampling cycles and calculates a frequency of which the engine speeds exceed a predetermined value (hereunder called "engine speed threshold value updating determination value") per unit time. Then, the difference between the engine speed threshold value for acceleration and the engine speed threshold value for deceleration can be updated based upon the frequency. For example, the more the frequency of which the engine speeds exceed the engine speed threshold value updating determination value increases, the greater the difference is set.

Next, the determination processes will be described in connection with another example in which a threshold value for the throttle valve opening is set. In this example, the determination processing part 11 b detects a throttle valve opening based upon signals inputted from the throttle valve position sensor 48 with predetermined sampling cycles.

When the movable conduit 31 is placed at the connected position Y, the determination processing part 11 b determines whether or not the throttle valve opening exceeds a predetermined threshold value (hereunder called "throttle valve opening threshold value for acceleration") is determined whenever the determination processing part 11 b detects the throttle valve opening. The determination processing part 11 b determines that the running state corresponds to the condition of disconnection when the throttle valve opening exceeds the throttle valve opening threshold value for acceleration.

On the other hand, when the movable conduit 31 is placed at the disconnected position X, the determination processing part 11 b determines whether or not the throttle valve opening falls below a threshold value (hereunder called "throttle valve opening threshold value for deceleration") which is lower than the throttle valve opening threshold value for acceleration is determined whenever the determination processing part 11 b detects the throttle valve opening. The determination processing part 11 b determines that the running state corresponds to the condition of connection when the throttle valve opening falls below the throttle valve opening threshold value for deceleration.

In this connection, a difference between the throttle valve opening threshold value for acceleration and the throttle valve opening threshold value for deceleration is, for example, a predetermined value. Also, the difference can be updated in response to a frequency of changes of the throttle valve opening. For example, the control section 11 detects throttle valve openings with predetermined sampling cycles and calculates a frequency of which the throttle valve openings exceed a predetermined value (hereunder called "throttle valve opening threshold value updating determination value") per unit time. Then, the difference between the throttle valve opening threshold value for acceleration and the deceleration moment throttle valve threshold value can be updated based upon the frequency. For example, the more the frequency of which the throttle valve openings exceed the throttle valve opening threshold value updating determination value increases, the greater the difference is set. Thereby, improper changes of the intake conduit length can be more effectively avoided when the rider drives the vehicle during which the throttle valve is frequently operated.

Also, the determination processing part 11 b can determine whether or not the engine load continues to exceed the engine speed threshold value for acceleration or the throttle valve opening threshold value for acceleration longer than a predetermined period of time (hereunder called "necessary time for acceleration") in order to determine whether or not the running state corresponds to the condition of disconnection. Thereby, frequent changes of the intake conduit length during acceleration can be avoided. Ride feelings during acceleration thus can be enhanced. Processes for this case can be executed, for example, as follows:

If the determination processing part 11b determines that the throttle valve opening exceeds the throttle valve opening threshold value for acceleration when the movable conduit 31 is placed at the connected position Y, the determination processing part 11 b starts to count an elapsing time from the initial moment of exceeding. Then, the determination processing part 11 b determines that the running state corresponds to the condition of disconnection when the throttle valve opening, which continues to exceed the throttle valve opening threshold value for acceleration, is detected over the necessary time for acceleration.

Additionally, the determination processing part 11 b can determine whether or not the engine load continues to exceed the engine speed threshold value for deceleration or the throttle valve opening threshold value for deceleration longer than a predetermined period of time (hereunder called "necessary time for deceleration") in order to determine whether or not the running state corresponds to the condition of connection. In this connection, the necessary time for deceleration can be set shorter than the necessary time for acceleration.

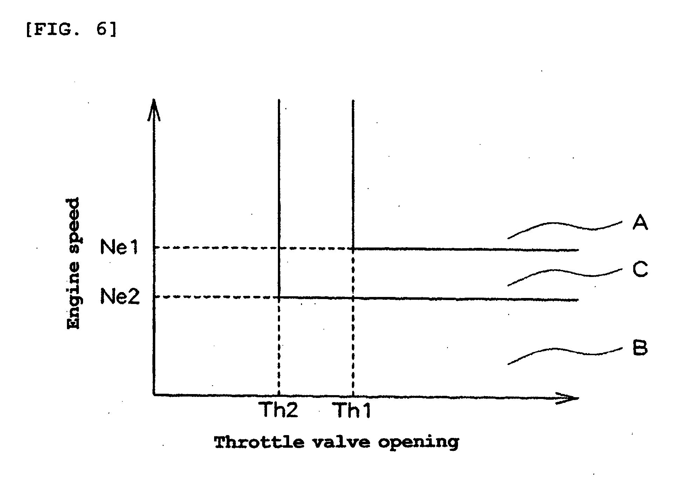

Also, both threshold values of the engine speed and the throttle valve opening can be set. FIG. 6 is a graph for explaining an example of the change control of the intake conduit length executed by the control section 11 in such a case. The horizontal axis of FIG. 6 indicates throttle valve openings, while the vertical axis thereof indicates engine speeds.

When the movable conduit 31 is placed at the connected position Y, the determination processing part 11 b determines whether or not the engine speed exceeds the engine speed threshold value Ne1 for acceleration and the throttle valve opening exceeds the throttle valve opening threshold value Th1 for acceleration with predetermined sampling cycles. Then, if the running state of the vehicle reaches the state (the area indicated by the letter A in FIG. 6) satisfying those conditions (i.e., the condition of disconnection), the change control part 11 a moves the movable conduit 31 to the disconnected position X to change the intake conduit length from the length of connection L1 to the length of disconnection L2. Afterwards, the determination processing part 11 b determines whether or not at least one of the conditions: the engine speed falls below the engine speed threshold value Ne2 for deceleration with the predetermined sampling cycles; and the throttle valve opening falls below the throttle valve opening threshold value Th2 for deceleration with the predetermined sampling cycles, is satisfied or not. Then, when the running state of the vehicle reaches a state (the area indicated by the letter B in FIG. 6) corresponding to either one of the conditions (the condition of connection), the change control part 11 a moves the movable conduit 31 to the connected position Y to change the intake conduit length from the length of disconnection L2 to the length of connection L1.

As shown in FIG. 6, in this sample as well, the engine speed threshold value Ne2 for deceleration is set lower than the engine speed threshold value Ne1 for acceleration, and the throttle valve opening threshold value Th2 for deceleration is set lower than the throttle valve opening threshold value Th1 for acceleration. As a result, even if the running state of the vehicle frequently varies in the area indicated by the letter C in FIG. 6, the change of the intake conduit length is restricted.

Additionally, the determination processing part 11 b detects a present intake conduit length (the length of connection L1 or the length of disconnection L2) by detecting a position of the movable conduit 31. For example, if the intake conduit length varying mechanism 14 has a position detecting sensor, the determination processing part 11 b detects the position of the movable conduit 31 based upon a signal inputted from the position detecting sensor. Also, when the movable conduit 31 reaches the disconnected position X or the connected position Y, the change control part 11 a can store information indicating the present position of the movable conduit 31 (hereunder called "position information") to the storage 12. In addition, the determination processing part 11b can detect the present position of the movable conduit 31 based upon the position information.

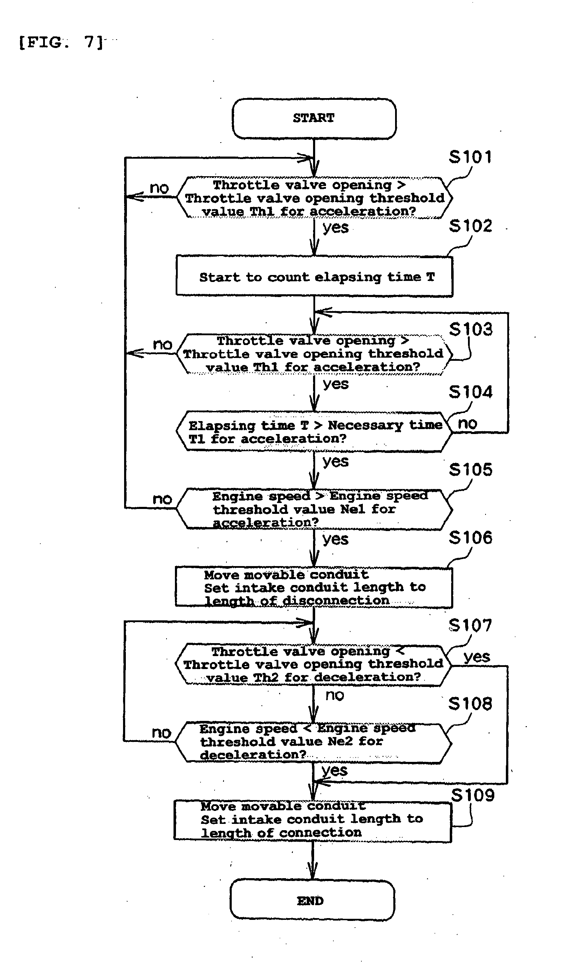

A flow of the processes executed by the control section 11 will be described below. FIG. 7 is a flowchart showing an example of the processes executed by the control section 11. Additionally, in the example described below, it is the condition of disconnection that both of conditions: the engine speed exceeds the engine speed threshold value for acceleration; and the throttle valve opening, which continues to exceed the throttle valve opening threshold value for acceleration, is detected over the necessary time for acceleration, are satisfied. Also, it is the condition of connection that either one of conditions: the engine speed falls below the engine speed threshold value for deceleration; or the throttle valve opening falls below the throttle valve opening threshold value for deceleration is satisfied. In addition, the movable conduit 31 is initially placed at the connected position Y.

First, the determination processing part 11 b executes a process for determining whether or not the running state of the vehicle corresponds to the condition of disconnection. Specifically, the determination processing part 11 b detects a throttle valve opening and determines whether or not the throttle valve opening exceeds the throttle valve opening threshold value Th1 for acceleration (S101). If the throttle valve opening does not exceed the throttle valve opening threshold value Th1 for acceleration, the determination processing part 11 b executes the process of S101 with predetermined sampling cycles until the throttle valve opening exceeds the throttle valve opening threshold value Th1 for acceleration. On the other hand, if the detected throttle valve opening exceeds the throttle valve opening threshold value Th1 for acceleration, the determination processing part 11 b starts to count the elapsing time T from the initial moment of exceeding (S102).

Afterwards, the determination processing part 11 b again detects a throttle valve opening and determines whether the throttle valve opening exceeds the throttle valve opening threshold value Th1 for acceleration or not (S103). On this occasion, if the throttle valve opening does not exceed the throttle valve opening threshold value Th1 for acceleration the determination processing part 11 b returns to the process of S101. On the other hand, if the detected throttle valve opening exceeds the throttle valve opening threshold value Th1 for acceleration, the determination processing part 11b determines whether or not the elapsing time T has exceeded the necessary time for acceleration T1 (S104). If the elapsing time T has not yet exceeded the necessary time for acceleration T1, the determination processing part 11b returns to the process of S103 after the sampling cycle ends to detect another throttle valve opening.

On the other hand, in the determination of S104, if the elapsing time T has exceeded the necessary time for acceleration T1, the determination processing part 11b detects an engine speed and determines whether or not the engine speed exceeds the engine speed threshold value Ne1 for acceleration (S105). On this occasion, if the engine speed does not exceed the engine speed threshold value Ne1 for acceleration, the determination processing part 11b returns to S101 and again executes the processes that follow.

On the other hand, if the engine speed exceeds the engine speed threshold value Ne1 for acceleration, the determination processing part 11 b determines that the running state of the vehicle corresponds to the condition of disconnection. As a result, the change control part 11 a moves the movable conduit 31 to the disconnected position X to set the intake conduit length to the length of disconnection L2 (S106).

Next, the determination processing part 11 b executes a process for determining whether or not the running state of the vehicle corresponds to the condition of connection. Specifically, the determination processing part 11 b detects a throttle valve opening and determines whether or not the throttle valve opening is lower than the throttle valve opening threshold value Th2 for deceleration (S107). On this occasion, if the throttle valve opening is lower than the throttle valve opening threshold value Th2 for deceleration, the determination processing part 11 b determines that the running state of the vehicle corresponds to the condition of connection. As a result, the change control part 11 a moves the movable conduit 31 to the connected position Y to set the intake conduit length to the length of connection L1 (S109).

On the other hand, in the determination of S107, if the throttle valve opening is not lower than the throttle valve opening threshold value Th2 for deceleration, the determination processing part 11 b detects an engine speed and determines whether or not the engine speed is lower than the engine speed threshold value Ne2 for deceleration (S108). On this occasion, if the engine speed is not lower than the engine speed threshold value Ne2 for deceleration, the determination processing part 11 b returns to S107 and again executes the processes that follow. On the other hand, if the engine speed is lower than the engine speed threshold value Ne2 for deceleration, the determination processing part 11 b determines that the running state of the vehicle corresponds to the condition of connection. As a result, the change control part 11 a moves the movable conduit 31 to the connected position Y to set the intake conduit length to the length of connection L1 (S109). During the running of the vehicle, the control section 11 repeats the processes described above.

In the intake control device 10 described above, the threshold values decided for the condition of connection (in this embodiment, the engine speed threshold value for deceleration, the throttle valve opening threshold value for deceleration, and so forth) are tower than the threshold values decided for the condition of disconnection (in this embodiment, the engine speed threshold value for acceleration, the throttle valve opening threshold value for acceleration, and so forth). As a result, even though the running state frequently varies in the proximity of the change conditions of the intake conduit length, improper changes of the intake conduit length can be avoided and the ride feelings can be enhanced.

Additionally, the present teaching is not limited to the intake control device 10 described above and can be modified in various ways. For example, in the flowchart shown in FIG. 7, the threshold values are set to both of the engine speed and the throttle valve opening in the condition of connection and the condition of disconnection. However, the threshold values can be set to either one of the engine speed and the throttle valve opening.

Also, in the intake conduit length varying mechanism 14 incorporated by the intake control device 10, the intake conduit length is changed by connecting the movable conduit 31 to the fixed conduit 32 or by disconnecting the movable conduit 31 from the fixed conduit 32. However, for example, the intake conduit length varying mechanism can have a plurality of intake passages as intake conduits, through which air supplied to the engine flows, and valves can be positioned within the respective intake passages. In this connection, the control section 11 can change the intake conduit length by opening or closing the valves in accordance with an engine load or the like.

The description above discloses (amongst others), in order to solve the problem discussed above, an intake control device including change control means for changing a length of an intake conduit between a predetermined first length and a second length shorter than the first length; and determining means for determining whether or not the length of the intake conduit needs to be changed by the change control means. The determining means includes, as a condition for determining the change from the first length to the second length, a condition that an engine load is higher than a predetermined first threshold Value, and includes, as a condition for determining the change from the second length to the first length, a condition that the engine load is lower than a second threshold value that is set lower than the first threshold value.

Also, in order to solve the problem discussed above, a straddle type vehicle according to the present teaching has the intake control device mounted thereto.

According to the present teaching, improper changes of the length of the intake conduit can be avoided even though the engine load frequently varies.

Also, according to the present teaching, the determining means further includes, as a condition for determining the change from the first length to the second length, a condition that an elapsing time in which a vehicle is adapted to run with an engine load higher than the predetermined first threshold value is longer than a predetermined necessary time.

According to this mode, the improper changes of the length of the intake conduit can be more surely avoided when the length of the intake conduit is set shorter.

Further, in accordance with another mode of the present teaching, the intake conduit includes a fixed conduit connected to an engine and a movable conduit movable between a connected position where the movable conduit is connected to the fixed conduit and a disconnected position where the movable conduit is spaced apart from the connected position, and the change control means changes the length of the intake conduit by moving the movable conduit between the connected position and the disconnected position.

The description above further discloses, according to a first preferred aspect, an intake control device comprising: change control means for changing a length of an intake conduit between a predetermined first length and a second length shorter than the first length; and determining means for determining whether or not the length of the intake conduit needs to be changed by the change control means, wherein the determining means includes, as a condition for determining the change from the first length to the second length, a condition that an engine load is higher than a predetermined first threshold value, and includes, as a condition for determining the change from the second length to the first length, a condition that the engine load is lower than a second threshold value that is set lower than the first threshold value.

Further, according to the first preferred aspect, the determining means further includes, as a condition for determining the change from the first length to the second length, a condition that an elapsing time in which a vehicle is adapted to run with an engine load higher than the predetermined first threshold value is longer than a predetermined necessary time.

Further, according to a second preferred aspect, the intake conduit includes a fixed conduit connected to an engine and a movable conduit movable between a connected position where the movable conduit is connected to the fixed conduit and a disconnected position where the movable conduit is spaced apart from the connected position, and the change control means changes the length of the intake conduit by moving the movable conduit between the connected position and the disconnected position.

The description further discloses a straddle type vehicle to which the intake control device according to the above aspects is mounted.

The description still further discloses, in order to provide an intake control device that can avoid improper changes of a length of an intake conduit even though an engine load frequently varies, an embodiment of an intake control device which includes: a change control part for changing a length of an intake conduit between the length of connection that is predetermined and the length of disconnection that is shorter than the length of connection; and a determination processing part for determining whether or not the length of the intake conduit is changed by the change control part. A condition for determining a change from the length of connection to the length of disconnection includes that an engine load is higher than a predetermined threshold value. Also, a condition for determining a change from the length of disconnection to the length of connection includes that the engine load is lower than a threshold value which is lower than the predetermined threshold value and a determining means is configured to determine requirement for the change from the first length to the second length based on the additional condition that an elapsing time in which a vehicle is adapted to run with an engine load higher than the predetermined first threshold value is longer than a predetermined necessary time.

## Claims

1. Intake control device for an engine comprising:
a change control means (11a) for changing a length (L1, L2) of an intake conduit between a first length (L1) and a second length. (L2) shorter than the first length (L1); and
a determining means (11b) for determining whether or not the length of the intake conduit needs to be changed by the change control means (11a),
wherein the determining means (11b) is configured to determine requirement that the first length (L1) is to be changed to the second length (L2) wherein, the determine requirement is based on the condition that an engine load is higher than a first threshold value (Th1, Ne1), and is configured to determine requirement that the second length (L2) is to be changed to the first length (L1) based on the condition that the engine load is lower than a second threshold value (Th2, Ne2),
and wherein the second threshold value is set lower than the first threshold value (Th1, Ne1) **characterized in that**
the determining means (11b) is configured to determine requirement for the change from the first length (L1) to the second length (L2) based on the additional condition that an elapsing time in which a vehicle is adapted to run with an engine load higher than the predetermined first threshold value (Th1, Ne1) is longer than a predetermined necessary time.

2. Intake control device according to claim 1, wherein the intake conduit includes a fixed conduit (32) connected to an engine and a movable conduit (31) movable between a connected position where the movable conduit is connected to the fixed conduit and a disconnected position where the movable conduit is spaced apart from the connected position, and the change control means is configured to change the length of the intake conduit by moving the movable conduit between the connected position and the disconnected position.

3. Straddle type vehicle to which the intake control device according to one of the claim 1 to 2 is mounted.

4. Method for controlling a change of a length of an intake conduit of an engine of a vehicle between a first length (L1) and a second length (L2), shorter than the first length (L1), wherein a running state of the vehicle is determined to correspond to a condition to change from the first length (L1) to the second length (L2) when a load of the engine is higher than a first threshold value, and to correspond to a condition to change from the second length (L2) to the first length (L1) when the load of the engine is lower than a second threshold value set lower than the first threshold value, **characterized in that** a determining means (11b) is configured to determine requirement for the change from the first length (L1) to the second length (L2) based on the additional condition that an elapsing time in which a vehicle is adapted to run with an engine load higher than the predetermined first threshold value (Th1, Ne1) is longer than a predetermined necessary time.

5. Method according to claim 4, wherein the first and second threshold values are respectively set for an engine speed and/or for a throttle valve opening.

6. Method according to claim 4 or 5, for control of the intake control device of claim 2, wherein, when the movable conduit (31) is placed at the connected position (Y), it is determined whether or not the engine speed exceeds an engine speed threshold value for acceleration,
and wherein, when the engine speed exceeds the engine speed threshold value for acceleration, it is determined that the running state of the vehicle corresponds to the condition of disconnection.

7. Method according to claim 6, wherein, when the movable conduit (31) is placed at the disconnected position (X), it is determined whether or not the engine speed falls below an engine speed threshold value for deceleration which is lower than the engine speed threshold value for acceleration, and wherein, when the engine speed falls below the engine speed threshold value for deceleration, it is determined that the running state of the vehicle corresponds to the condition of connection.

8. Method according to claim 7, wherein a difference between the engine speed threshold value for acceleration and the engine speed threshold value for deceleration is updated in response to a frequency of changes of the engine speed.

9. Method according to one of the claims 4 to 8, wherein, when the movable conduit (31) is placed at the connected position (Y), it is determined whether or not the throttle valve opening exceeds a throttle valve opening threshold value for acceleration, and wherein, when the throttle valve opening exceeds the throttle valve opening threshold value for acceleration, it is determined that the running state corresponds to the condition of disconnection.

10. Method according to claim 9, wherein, when the movable conduit (31) is placed at the disconnected position (X), it is determined whether or not the throttle valve opening falls below a throttle valve opening threshold value for deceleration which is lower than the throttle valve opening threshold value for acceleration, and wherein, when the throttle valve opening falls below the throttle valve opening threshold value for deceleration, it is determined that the running state corresponds to the condition of connection.

11. Method according to claim 10, wherein a difference between the throttle valve opening threshold value for acceleration and the throttle valve opening threshold for deceleration is updated in response to a frequency of changes of the throttle valve opening.

## Patentansprüche

1. Ansaug-Steuervorrichtung für einen Motor, umfassend:
eine Änderungssteuereinrichtung (11a) zum Ändern der Länge (L1, L2) von einer Ansaugleitung zwischen einer ersten Länge (L1) und einer zweiten Länge (L2), die kürzer ist als die erste Länge (L1), und
eine Bestimmungseinrichtung (11 b) zum Bestimmen, ob die Länge der Ansaugleitung durch die Änderungssteuereinrichtung (11a) geändert werden muss,
wobei die Bestimmungseinrichtung (11b) so konfiguriert ist, dass die Anforderung bestimmt wird, die erste Länge (L1) zu der zweiten Länge (L2) zu ändern,
wobei die Anforderung auf der Bedingung basiert, dass eine Motorlast höher als ein erster Schwellenwert (Th1, Ne1) ist, und so konfiguriert ist, dass die Anforderung bestimmt wird, die zweite Länge (L2) zu der ersten Länge (L1) zu ändern, unter der Bedingung, dass die Motorlast niedriger als ein zweiter Schwellenwert (Th2, Ne2) ist, und
wobei der zweite Schwellenwert niedriger ist als der erste Schwellwert (Th1, Ne1),
**dadurch gekennzeichnet, dass** die Bestimmungseinrichtung (11a) so konfiguriert ist, dass die Anforderung für die Änderung von der ersten Länge (L1) zu der zweiten Länge (L2) unter der weiteren Bedingung bestimmt wird, dass eine verstrichene Zeitspanne, für die ein Fahrzeug ausgelegt ist, mit einer höheren Motorlast betrieben zu werden als der vorbestimmte erste Schwellenwert (Th1, Ne1) länger ist als eine vorbestimmte erforderliche Zeitspanne.

2. Ansaug-Steuervorrichtung nach Anspruch 1, wobei die Ansaugleitung eine feste Leitung (32) aufweist, die mit einem Motor und einer beweglichen Leitung (31) verbunden ist, die zwischen einer verbundenen Position, in der die bewegliche Leitung mit der festen Leitung verbunden ist, und einer getrennten Position, in welcher die bewegliche Leitung beabstandet von der verbundenen Position ist, bewegbar ist, und die Änderungssteuereinrichtung so konfiguriert ist, dass die Länge der Ansaugleitung geändert wird durch Bewegen der beweglichen Leitung zwischen der verbundenen Position und der getrennten Position.

3. Grätschsitz-Fahrzeug an dem die Ansaug-Steuervorrichtung nach einem der Ansprüche 1 bis 2 montiert ist.

4. Verfahren zur Steuerung einer Änderung einer Länge einer Ansaugleitung eines Motors eines Fahrzeugs zwischen einer ersten Länge (L1) und einer zweiten Länge (L2), die kürzer als die erste Länge (L1) ist,
wobei ein Fahrzustand des Fahrzeugs derart festgelegt ist, dass er einem Zustand entspricht, zur Änderung von der ersten Länge (L1) in die zweite Länge (L2), wenn die Last des Motors höher ist als ein erster Schwellenwert, und einem Zustand zu entsprechen, zur Änderung der zweiten Länge (L2) in die erste Länge (L1), wenn die Last des Motors niedriger ist als ein zweiter Schwellenwert, der niedriger ist als der erste Schwellenwert,
**dadurch gekennzeichnet, dass** eine Bestimmungseinrichtung (11a) so konfiguriert ist, dass die Anforderung für die Änderung von der ersten Länge (L1) zu der zweiten Länge (L2) unter der weiteren Bedingung bestimmt wird, dass eine verstrichene Zeitspanne, für die ein Fahrzeug ausgelegt ist, mit einer höheren Motorlast betrieben zu werden als der vorbestimmte erste Schwellenwert (Th1, Ne1) länger ist als eine vorbestimmte erforderliche Zeitspanne.

5. Verfahren nach Anspruch 4, wobei die ersten und zweiten Schwellenwerte jeweils für eine Motordrehzahl und/oder für eine Drosselklappenöffnung festgelegt sind.

6. Verfahren nach Anspruch 4 oder 5, zur Steuerung der Ansaug-Steuervorrichtung nach Anspruch 2, wobei, wenn die bewegliche Leitung (31) in der verbundenen Position (Y) angeordnet ist, bestimmt wird, ob die Motordrehzahl einen Motordrehzahl-Schwellenwert für die Beschleunigung überschreitet,
und wobei, wenn die Motordrehzahl den Motordrehzahl-Schwellenwert für die Beschleunigung überschreitet, bestimmt wird, dass der Fahrzustand des Fahrzeugs dem Zustand zum Unterbrechen entspricht.

7. Verfahren nach Anspruch 6, wobei, wenn die bewegliche Leitung (31) in der getrennten Position (X) angeordnet ist, bestimmt wird, ob die Motordrehzahl unter einen Motordrehzahl-Schwellwert für die Verzögerung abfällt, der niedriger als der Motordrehzahl-Schwellenwert für die Beschleunigung ist, und wobei, wenn die Motordrehzahl unterhalb des Motordrehzahl-Schwellenwerts für die Verzögerung abfällt, bestimmt wird, dass der Fahrzustand des Fahrzeugs dem Zustand zum Verbinden entspricht.

8. Verfahren nach Anspruch 7, wobei eine Differenz zwischen dem Motordrehzahl-Schwellenwert für die Beschleunigung und dem Motordrehzahl-Schwellwert für die Verzögerung in Abhängigkeit von einer Frequenz von Änderungen der Motordrehzahl aktualisiert wird.

9. Verfahren nach einem der Ansprüche 4 bis 8, wobei, wenn die bewegliche Leitung (31) in der verbundenen Position (Y) angeordnet ist, bestimmt wird, ob die Drosselklappenöffnung einen Drosselklappenöffnungs-Schwellenwert für die Beschleunigung überschreitet, und wobei, wenn die Drosselklappenöffnung den Drosselklappenöffnungs-Schwellenwert für die Beschleunigung überschreitet, bestimmt wird, dass der Fahrzustand dem Zustand zum Unterbrechen entspricht.

10. Verfahren nach Anspruch 9, wobei, wenn die bewegliche Leitung (31) in der getrennten Position (X) angeordnet ist, bestimmt wird, ob die Drosselklappenöffnung unter einen Drosselklappenöffnungs-Schwellwert für die Verzögerung abfällt, der niedriger als der Drosselklappenöffnungs-Schwellenwert für die Beschleunigung ist, und wobei, wenn die Drosselklappenöffnung unter den Drosselklappenöffnungs-Schwellwert für die Verzögerung abfällt, bestimmt wird, dass der Fahrzustand dem Zustand zum Verbinden entspricht.

11. Verfahren nach Anspruch 10, wobei eine Differenz zwischen dem Drosselklappenöffnungs-Schwellenwert für die Beschleunigung und dem Drosselklappenöffnungs-Schwellwert für die Verzögerung in Abhängigkeit von einer Frequenz von Änderungen der Drosselklappenöffnung aktualisiert wird.

## Revendications

1. Dispositif de contrôle d'admission pour un moteur, comprenant:
un moyen de contrôle de changement (11a) pour changer une longueur (L1, L2) d'un conduit d'admission entre une première longueur (L1) et une deuxième longueur (L2) inférieure à la première longueur (L1); et
un moyen de détermination (11 b) pour déterminer si la longueur du conduit d'admission doit être changée ou non par le moyen de contrôle de changement (11a),
dans lequel le moyen de détermination (11 b) est configuré pour déterminer l'exigence de changement de la première longueur (L1) à la deuxième longueur (L2),
dans lequel la détermination d'exigence est basée sur la condition qu'une charge moteur soit supérieure à une première valeur seuil (Th1, Ne1), et est configurée pour déterminer l'exigence de changement de la deuxième longueur (L2) à la première longueur (L1) sur base de la condition que la charge moteur soit inférieure à une deuxième valeur seuil (Th2, Ne2),
et dans lequel la deuxième valeur seuil est réglée pour être inférieure à la première valeur seuil (Th1, Ne1),
**caractérisé en ce que** le moyen de détermination (11b) est configuré pour déterminer l'exigence de changement de la première longueur (L1) à la deuxième longueur (L2) sur base de la condition additionnelle qu'un temps écoulé au cours duquel un véhicule est adapté pour fonctionner avec une charge moteur supérieure à la première valeur seuil prédéterminée (Th1, Ne1) est plus long qu'un temps nécessaire prédéterminé

2. Dispositif de contrôle d'admission selon la revendication 1, dans lequel le conduit d'admission comprend un conduit fixe (32) connecté à un moteur et un conduit mobile (31) déplaçable entre une position connectée dans laquelle le conduit mobile est connecté au conduit fixe et une position déconnectée dans laquelle le conduit mobile est espacé de la position connectée, et le moyen de contrôle de changement est configuré pour changer la longueur du conduit d'admission en déplaçant le conduit mobile entre la position connectée et la position déconnectée.

3. Véhicule de type à enfourcher sur lequel est monté le dispositif de contrôle d'admission selon l'une des revendications 1 et 2.

4. Procédé pour contrôler un changement de longueur d'un conduit d'admission de moteur d'un véhicule entre une première longueur (L1) et une deuxième longueur (L2) inférieure à la première longueur (L1), dans lequel un état de fonctionnement du véhicule est déterminé pour correspondre à une condition pour changer de la première longueur (L1) à la deuxième longueur (L2) lorsqu'une charge du moteur est supérieure à une première valeur seuil, et pour correspondre à une condition pour changer de la deuxième longueur (L2) à la première longueur (L1) lorsque la charge du moteur est inférieure à une deuxième valeur seuil réglée de manière à être inférieure à la première valeur seuil, **caractérisé en ce qu'**un moyen de détermination (11b) est configuré pour déterminer l'exigence de changement de la première longueur (L1) à la deuxième longueur (L2) sur base de la condition additionnelle qu'un temps écoulé au cours duquel un véhicule est adapté pour fonctionner avec une charge moteur supérieure à la première valeur seuil prédéterminée (Th1, Ne1) est plus long qu'un temps nécessaire prédéterminé.

5. Procédé selon la revendication 4, dans lequel les première et deuxième valeurs seuil sont respectivement réglées pour une vitesse moteur et/ou pour une ouverture de vanne d'étranglement.

6. Procédé selon la revendication 4 ou 5 pour contrôler le dispositif de contrôle d'admission selon la revendication 2, dans lequel, lorsque le conduit mobile (31) est placé en position connectée (Y), il est déterminé si la vitesse du moteur dépasse ou non une valeur seuil de vitesse du moteur pour l'accélération,
et dans lequel, si la vitesse du moteur dépasse la valeur seuil de vitesse du moteur pour l'accélération, il est déterminé que l'état de fonctionnement du véhicule correspond à la condition de déconnexion.

7. Procédé selon la revendication 6, dans lequel, lorsque le conduit mobile (31) est placé en position déconnectée (X), il est déterminé si la vitesse du moteur chute ou non sous une valeur seuil de vitesse du moteur pour la décélération, qui est inférieure à la valeur seuil de vitesse du moteur pour l'accélération, et dans lequel, si la vitesse du moteur chute sous la valeur seuil de vitesse du moteur pour la décélération, il est déterminé que l'état de fonctionnement du véhicule correspond à la condition de connexion.

8. Procédé selon la revendication 7, dans lequel une différence entre la valeur seuil de vitesse du moteur pour l'accélération et la valeur seuil de vitesse du moteur pour la décélération est mise à jour en réponse à une fréquence de changements de la vitesse du moteur.

9. Procédé selon l'une des revendications 4 à 8 dans lequel, lorsque le conduit mobile (31) est placé en position connectée (Y), il est déterminé si l'ouverture de la vanne d'étranglement dépasse ou non une valeur seuil d'ouverture de vanne d'étranglement pour l'accélération, et dans lequel, si l'ouverture de la vanne d'étranglement dépasse la valeur seuil d'ouverture de la vanne d'étranglement pour l'accélération, il est déterminé que l'état de fonctionnement correspond à la condition de déconnexion.

10. Procédé selon la revendication 9 dans lequel, lorsque le conduit mobile (31) est placé en position déconnectée (X), il est déterminé si l'ouverture de la vanne d'étranglement chute ou non sous une valeur seuil d'ouverture de la vanne d'étranglement pour la décélération, qui est inférieure à la valeur seuil d'ouverture de la vanne d'étranglement pour l'accélération, et dans lequel, si l'ouverture de la vanne d'étranglement chute sous la valeur seuil d'ouverture de la vanne d'étranglement pour la décélération, il est déterminé que l'état de fonctionnement correspond à la condition de connexion.

11. Procédé selon la revendication 10, dans lequel une différence entre la valeur seuil d'ouverture de la vanne d'étranglement pour l'accélération et le seuil d'ouverture de la vanne d'étranglement pour la décélération est mise à jour en réponse à une fréquence de changements de l'ouverture de vanne d'étranglement.
